# EUROPÄISCHE PATENTSCHRIFT

(11) **EP 2 454 434 B1**
(45) Veröffentlichungstag und Bekanntmachung des Hinweises auf die Patenterteilung: **13.11.2013**
(21) Anmeldenummer: 10727747.7
(22) Anmeldetag: 02.07.2010
(51) Int. Cl.: E05F 15/10, E05F 15/12, F16H 37/04

(54) **ANTRIEBSEINRICHTUNG EINES FAHRZEUG-BAUTEILS, INSBESONDERE EINER KAROSSERIEKLAPPE**
DRIVE DEVICE OF A VEHICLE COMPONENT, PARTICULARLY A BODY HATCH
DISPOSITIF DE MOTORISATION D'UN COMPOSANT AUTOMOBILE, EN PARTICULIER D'UNE TRAPPE DE CARROSSERIE

(30) Priorität: 15.07.2009 DE 102009027740; 25.11.2009 DE 102009047130
(43) Veröffentlichungstag der Anmeldung: 23.05.2012
(73) Patentinhaber: Robert Bosch GmbH, 70442 Stuttgart (DE)
(72) Erfinder: OBERLE, Hans-Juergen, 76437 Rastatt (DE); BRAUN, Wilhelm, 77815 Buehl (DE); SCHMIDT, Willi, 76297 Stutensee-Buechig (DE); REICHMANN, Siegfried, 77866 Rheinau Freistett (DE)
(86) Internationale Anmeldenummer: PCT/EP2010/059427
(87) Internationale Veröffentlichungsnummer: WO 2011/006774

(56) Entgegenhaltungen:
- EP-A1- 0 440 819
- WO-A1-03/036119
- DE-A1- 10 117 934

## Beschreibung

Die Erfindung bezieht sich auf eine Antriebseinrichtung eines Fahrzeugbauteils, insbesondere einer Karosserieklappe wie beispielsweise einer Heckklappe, nach dem Oberbegriff des Anspruches 1.

### Stand der Technik

Bekannt sind elektrische Heckklappenantriebe, die einen elektrischen Antriebsmotor sowie ein Planetengetriebe umfassen, welches üblicherweise zur Untersetzung der Antriebsdrehzahl aus mehreren Planetenstufen besteht. Das Planetengetriebe ist dem Antriebsmotor axial vorgelagert, was den Vorteil eines geringen Durchmessers bietet, so dass in Radialrichtung nur ein verhältnismäßig geringer Einbauraum erforderlich ist. Planetengetriebe weisen jedoch eine verhältnismäßig große Anzahl an Bauteilen auf und bedürfen einer komplexen Montage. Nachteilig ist auch, dass die erste, von der Ankerwelle des elektrischen Antriebsmotors beaufschlagte Planetenstufe mit hoher Drehzahl umläuft, was zu einer unerwünschten Geräuschentwicklung führt.

Die Druckschrift EP 0 440 819 A1 offenbart eine Antriebseinrichtung für einen Fahrzeug-Rückspiegel, wobei die Antriebseinrichtung einen elektrischen Antriebsmotor umfasst, dessen Ankerwelle mit einem Ritzel auf einer weiteren Welle kämmt, welche orthogonal zur Motorachse steht. Die weitere Welle kämmt mit einem weiteren Ritzel, welches mit der Abtriebswelle verbunden ist. Auf diese Weise wird eine zweifache Umlenkung in der Übertragung der Antriebsbewegung von der Ankerwelle zur Abtriebswelle erreicht.

### Offenbarung der Erfindung

Der Erfindung liegt die Aufgabe zu Grunde, mit einfachen Maßnahmen eine kompakt bauende und geräuscharme Antriebseinrichtung eines Fahrzeug-Bauteils anzugeben.

Diese Aufgabe wird erfindungsgemäß mit den Merkmalen des Anspruches 1 gelöst. Die Unteransprüche geben zweckmäßige Weiterbildungen an.

Die erfindungsgemäße Antriebseinrichtung dient zum Antrieb eines Fahrzeugbauteils, insbesondere eines Karosseriebauteils wie beispielsweise einer Heckklappe, wobei das Fahrzeugbauteil mittels der Antriebseinrichtung zwischen zumindest zwei Positionen - beispielsweise einer Schließposition und einer Öffnungsposition - zu verstellen ist. Die Antriebseinrichtung ist elektrisch betätigbar und umfasst einen elektrischen Antriebsmotor sowie eine Getriebeeinrichtung zur Betätigung einer Abtriebswelle, welche das Fahrzeugbauteil verstellt, so dass die Getriebeeinrichtung die Antriebsbewegung des Motors in eine Stellbewegung zur Betätigung des Fahrzeugbauteils umsetzt. Hierfür ist die Getriebeeinrichtung mit der Ankerwelle des elektrischen Antriebsmotors gekoppelt, wobei über das Getriebe die Antriebsbewegung der Ankerwelle in eine Antriebsbewegung der Abtriebswelle umgesetzt wird, welche das Fahrzeugbauteil beaufschlagt. In der Regel erfolgt über das Getriebe eine Reduzierung der Drehzahl von der Ankerwelle zur Abtriebswelle.

Erfindungsgemäß umfasst die Getriebeeinrichtung zumindest eine Doppelgetriebeeinheit, bestehend aus zwei Getriebestufen mit zweifacher Richtungsumlenkung. Über die beiden Getriebestufen wird die Richtung der Antriebsbewegung von der Ankerwelle zur Abtriebswelle zweifach winklig umgelenkt.

Diese Ausführung weist verschiedene Vorteile auf. Auf Grund der zweifachen Umlenkung in der Doppelgetriebeeinheit kann unter Beibehaltung der gewünschten Getriebeuntersetzung eine in Achsrichtung verhältnismäßig kurz bauende Ausführung realisiert werden. Trotz der axial verkürzten Ausführung baut die Ausführung in Quer- bzw. Radialrichtung nicht oder nur geringfügig größer als aus dem Stand der Technik bekannte Ausführungen mit mehrstufigen Planetengetrieben.

Grundsätzlich kann als Doppelgetriebeeinheit ein geräuscharmes, nur eine geringe Anzahl an Bauteilen aufweisendes Getriebe eingesetzt werden, das insbesondere mindestens eine Schneckenstufe und bevorzugt eine Doppelschneckenstufe aufweist, die mit zwei separaten Schneckenstufen ausgeführt ist. Über das Schneckenstufengetriebe lässt sich in besonders einfacher Weise eine doppelte Richtungsumkehr realisieren. Zugleich ist auf Grund der konstruktiv einfachen Ausführung mit verhältnismäßig wenigen bewegten Bauteilen auch ein geräuscharmer Betrieb gewährleistet. Bauartbedingt weisen derartige Schneckengetriebe gegenüber Stirnradgetrieben Vorteile hinsichtlich der Anzahl der Bauteile und der Geräuschentwicklung auf.

Die mindestens eine Schneckenstufe der Doppelgetriebeeinheit weist gemäß weiterer vorteilhafter Ausführung eine mehrgängige Schnecke mit zumindest zwei Gänge auf, wobei ggf. auch Ausführungen mit mehr Gängen wie z.B. drei, vier oder fünf Gängen in Betracht kommen. Da mit zunehmender Gangzahl auch der Steigungswinkel ansteigt, vergrößert sich der Wirkungsgrad der Schneckenstufe. Zugleich sinkt das Durchdrehmoment ab, welches erforderlich ist, um in manueller Weise eine Verstellung der Antriebseinrichtung durchzuführen. Ist die Schnecke der Schneckenstufe mit nur einem Gang versehen, so tritt eine Selbsthemmung ein, welcher einer manuellen Betätigung entgegensteht. Bei mehrgängigen Schnecken kann dagegen manuell ein Durchdrehmoment aufgebracht werden, das zu einer Verstellung der Antriebseinrichtung führt. Das Durchdrehmoment übersteigt das Haltemoment, welches bei nicht-betätigtem Antriebsmotor die aktuelle Position hält, gleichwohl liegt das Durchdrehmoment bei mehrgängigen Schnecken in einer Größenordnung, die manuell aufgebracht werden kann. Dies hat den Vorteil, dass beispielsweise bei einem Ausfall des elektrischen Antriebsmotors das betreffende Fahrzeugbauteil durch eine manuelle Betätigung verstellt werden kann, was bei einer eingängigen Schnecke der Schneckenstufe aufgrund der Selbsthemmung nicht ohne weiteres möglich ist. Die Mehrgängigkeit der Schnecke in der Schneckenstufe stellt somit sicher, dass in Notfällen manuell eingegriffen werden kann. So ist es beispielsweise möglich, im Falle eines Einbaus der Antriebseinrichtung für eine Heckklappe in einem Fahrzeug die Heckklappe bei einem Ausfall des Antriebsmotors zu öffnen bzw. zu schließen.

Sofern beide Getriebestufen der Doppelgetriebeeinheit als Schneckenstufen ausgeführt sind, sind vorzugsweise auch beide Schnecken der Schneckenstufen jeweils mehrgängig mit zumindest zwei Gängen ausgeführt, um eine Selbsthemmung des Getriebes zu vermeiden. Hierbei kommen sowohl Ausführungen in Betracht, bei denen die beiden Schneckenstufen die gleiche Gangzahl aufweisen als auch Ausführungen mit einer unterschiedlichen Gangzahl, soweit sichergestellt ist, dass beide Schneckenstufen mindestens zweigängig ausgeführt sind. Mit zunehmender Gangzahl erhöht sich der Wirkungsgrad der Schneckenstufe, dementsprechend wird das Durchdrehmoment herabgesetzt. Der Gesamtwirkungsgrad des Doppelschneckengetriebes wird durch Multiplikation der Einzelwirkungsgrade jeder Schneckenstufe ermittelt.

Sofern weitere Getriebeeinheiten in der Antriebseinrichtung ebenfalls als Schneckenstufe ausgeführt sind, sind auch diese mit einer Gangzahl von mindestens zwei auszustatten, um eine Selbsthemmung auszuschließen.

Die Richtungsumlenkung in der Doppelgetriebeeinheit mit den zwei Getriebestufen kann auf verschiedene Arten realisiert werden. Gemäß bevorzugter Ausführung ist vorgesehen, dass in jeder Getriebestufe eine 90°-Winkelumlenkung durchgeführt wird, so dass die Abtriebswelle, welche direkt oder indirekt von der zweiten Getriebestufe beaufschlagt und über die die Stellbewegung auf das Fahrzeugbauteil übertragen wird, parallel zur Ankerwelle des elektrischen Antriebsmotors liegt. Vorzugsweise werden die Dimensionierungen in den Getriebestufen in der Weise gewählt, dass die Abtriebswelle koaxial zur Ankerwelle liegt. Die Koaxialität wird über eine zusätzliche, nachgeschaltete Getriebestufe erreicht, mit dem außerdem eine weitere Getriebeuntersetzung erzielt werden kann.

Die parallele bzw. koaxiale Ausrichtung von Ankerwelle und Abtriebswelle kann grundsätzlich auch dadurch erreicht werden, dass in den beiden Getriebestufen der Doppelgetriebeeinheit insgesamt eine entsprechende Umlenkung durchgeführt wird, wobei die Umlenkungswinkel pro Getriebestufe auch von 90° abweichen können. Pro Getriebestufe sind somit Winkelumlenkungen in einem Winkelbereich größer 0° und kleiner 90° möglich, wobei bevorzugt eine Gesamtumlenkung eingestellt wird, bei der der Eingang und der Ausgang der Doppelgetriebeeinheit parallel und insbesondere koaxial zueinander ausgerichtet sind.

Die Ausführung der Doppelgetriebeeinheit als Schneckengetriebe weist gegenüber Planetengetrieben den Vorteil eines einfacheren konstruktiven Aufbaus auf. Üblicherweise ist pro Schneckenstufe eine Welle mit je einer drehfest darauf angeordneten Schnecke und einem Schneckenrad vorgesehen, wobei die Schnecke der Welle der ersten Stufe mit dem Schneckenrad der Welle der zweiten Stufe kämmt. In der ersten Stufe wird die Welle eingangsseitig über ein dort angeordnetes Schneckenrad von einer mit der Ankerwelle drehfest verbundenen Schnecke angetrieben, die zweite Stufe ist ausgangsseitig über ein fest mit der zweiten Welle verbundenes Ritzel mit einer nachgeschalteten Getriebestufe gekoppelt.

Als eine nachgeschaltete Getriebestufe ist eine Stirnradstufe vorgesehen. Je nach Anforderung an die Übersetzung und das Drehmoment ist ein zusätzliches, nachgeschaltetes Planetengetriebe mit einer oder mehreren Planetenstufen vorgesehen, wobei das Planetengetriebe vom Abtriebsrad der Stirnradstufe angetrieben wird. Abhängig von den Anforderungen ist es auch denkbar, jedoch nich erfindungsgemäß, den Abtrieb über die Stirnradstufe zu realisieren. Da über die vorgeschaltete Doppelgetriebeeinheit bereits eine Untersetzung der Ankerdrehzahl stattgefunden hat, ist die Eingangsdrehzahl am Planetengetriebe reduziert, so dass an dieser Stelle keine unerwünscht hohe Geräuschentwicklung auftritt.

Das Ritzel auf der Welle der zweiten Getriebestufe kämmt mit einem Stirnrad, das mit dem Sonnenrad des Planetengetriebes drehfest verbunden ist, welches mit Planetenrädern des Planetengetriebes zusammenwirkt. Das nachgeschaltete Stirnradgetriebe weist den weiteren Vorteil auf, dass Koaxialität zwischen der zentralen Drehachse des Planetengetriebes und der Drehachse der Ankerwelle hergestellt werden kann.

Abtriebsseitig ist das Planetengetriebe, insbesondere ein die Planetenräder aufnehmender Planetenradträger drehfest mit der Abtriebswelle verbunden, welche das zu betätigende Fahrzeugbauteil beaufschlagt.

Gemäß einer nicht erfindungsgemäßen Ausführungsvariante ist das Stirn- bzw. Abtriebsrad mit dem Planetenträger verbunden, wobei das Sonnenrad den Abtrieb bildet.

Die Doppelgetriebeeinheit besitzt vorteilhafterweise in Radialrichtung, also quer zur Ankerwelle gesehen, gegenüber einer zylindrischen Außenfläche der nachgeschalteten Getriebestufe lediglich einen Überstand, der maximal so groß ist wie der Radius der nachgeschalteten Getriebestufe. Insbesondere in der Ausführung der Doppelgetriebeeinheit als Schneckengetriebe erstreckt sich der radiale Überstand nicht über den gesamten Umfang, sondern nur über einen Teilbereich bzw. ein Segment. Der Überstand beträgt ggf. deutlich weniger als der Radius der nachgeschalteten Getriebestufe, wobei gemäß einer besonders vorteilhaften Ausführung vorgesehen ist, dass die Doppelgetriebeeinheit vollständig innerhalb der zylindrischen Außenfläche der nachgeschalteten Getriebestufe liegt.

Gegebenenfalls, jedoch nicht erfindungsgemäß, kann auf die nachgeschaltete Getriebestufe auch verzichtet werden. Grundsätzlich reicht eine Ausführung der Getriebeeinrichtung als Doppelgetriebeeinheit aus, bestehend aus zwei Getriebestufen mit insgesamt zweifacher Richtungsumlenkung.

Sofern eine zusätzliche Getriebeeinheit nachgeschaltet ist, so kann diese in einer weiteren, nicht erfindungsgemäßen Ausführung ebenfalls als Schneckengetriebe ausgebildet sein.

Weitere Vorteile und zweckmäßige Ausführungen sind den weiteren Ansprüchen, der Figurenbeschreibung und der Zeichnung zu entnehmen, in der eine Antriebseinrichtung einer Heckklappe in einem Fahrzeug im Schnitt dargestellt ist.

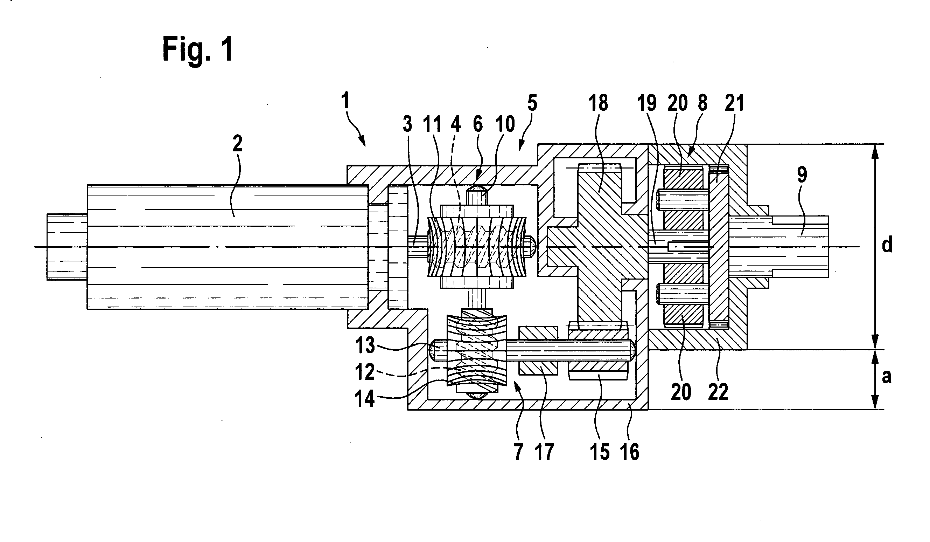

Die in Fig. 1 dargestellte Antriebsvorrichtung 1 umfasst einen elektrischen Antriebsmotor 2 sowie als Getriebeeinrichtung in einem Getriebegehäuse 16 eine Doppelgetriebeeinheit 5, eine Stirnradstufe mit einem Ritzel 15 und einem Stirn- bzw. Abtriebsrad 18 und ein nachgeschaltetes Planetengetriebe 8 zum Antrieb einer Abtriebswelle 9. Die Ankerwelle des elektrischen Antriebsmotors 2 ist mit einer drehfesten Schnecke 4 versehen, welche eine erste Getriebestufe 6 der Doppelgetriebeeinheit 5 antreibt, wobei die Doppelgetriebeeinheit 5 zusätzlich zur ersten Getriebestufe 6 eine zweite Getriebestufe 7 aufweist, die im Übertragungsweg zwischen erster Getriebestufe 6 und dem Planetengetriebe 8 liegt. Der kinematische Übertragungsweg lautet somit Ankerwelle 3 mit Schnecke 4 - erste Getriebestufe 6 - zweite Getriebestufe 7 - Planetengetriebe 8 - Abtriebswelle 9.

Die Doppelgetriebeeinheit 5 ist als Schneckengetriebe ausgeführt, beide Getriebestufen 6 und 7 sind demzufolge als Schneckenstufen ausgebildet. Die erste Getriebestufe 6 umfasst eine Welle 10 und ein drehfest mit der Welle 10 verbundenes Schneckenrad 11. Der ersten Getriebestufe 6 ist außerdem die Schnecke 4 auf der Ankerwelle zugeordnet, wobei die Schnecke 4 mit dem Schneckenrad 11 kämmt. Die Welle 10 ist orthogonal zur Ankerwelle 3 ausgerichtet.

Auf der dem Schneckenrad 11 abgewandten Seite weist die Welle 10 eine drehfest angeordnet Schnecke 12 auf, die Teil der zweiten Getriebestufe 7 ist, welche darüber hinaus eine Welle 13 und ein drehfest auf der Welle 13 angeordnetes Schneckenrad 14 umfasst. Die Welle 13 ist parallel versetzt zur Ankerwelle 3 im Getriebegehäuse 16 angeordnet und in einem Lager 17 drehbar gelagert aufgenommen. Das Schneckenrad 14 kämmt mit der Schnecke 12 auf der ersten Welle 10.

Die Schnecken 4 und 12 beider Schneckenstufen 6 bzw. 7 sind vorzugsweise mehrgängig ausgeführt und weisen jeweils mindestens zwei Gänge auf, wobei auch Ausführungen mit drei, vier oder fünf oder mehr Gängen in Betracht kommen. Die Gangzahl der Schnecken 4, 12 kann sich voneinander unterscheiden oder auch gleich sein. Auf Grund der Gangzahl von mindestens zwei in jeder Schneckenstufe ist eine Selbsthemmung des Getriebes ausgeschlossen, so dass manuell bei einem Ausfall des Antriebsmotors ein Durchdrehmoment erzeugt werden kann, um das Fahrzeugbauteil in die gewünschte Position zu bringen.

Auf der der ersten Getriebestufe 6 gegenüberliegenden Seite ist die Welle 13 über ein drehfest auf der Welle 13 angeordnetes Ritzel 15 mit einem im Getriebegehäuse 16 drehbar gelagerten Stirnrad 18 gekoppelt, das von dem Ritzel 15 angetrieben wird. Das Stirnrad 18 stellt eine Zwischengetriebestufe dar, die zwischen der zweiten Getriebestufe 7 der Doppelgetriebeeinheit 5 und dem nachgeordneten Planetengetriebe 8 liegt. Das Stirnrad 18 ist koaxial zur Ankerwelle 3 angeordnet. Über das Stirnrad 18 ist eine weitere Drehzahlreduzierung mit einhergehender Momentenerhöhung gegeben. Das Stirnrad 18 ist drehfest mit einem Sonnenrad 19 des Planetengetriebes 8 verbunden, über das eine weitere Drehzahlreduzierung erzielt wird. Das Sonnenrad 19 kämmt mit Planetenrädern 20, die an einem Planetenträger 21 aufgenommen sind und sich an der Innenseite eines Hohlrads 22 des Planetengetriebes 8 abstützen. Der Planetenträger 21 ist drehfest mit der Abtriebswelle 9 verbunden.

Die Abtriebswelle 9 verläuft koaxial zur Ankerwelle 3. Das Planetengetriebe 8 weist einen Durchmesser d auf, der den Durchmesser des Antriebsmotors 2 übersteigt. Das Doppelschneckengetriebe 5 besitzt eine radiale Erstreckung, die über den Durchmesser des Planetengetriebes 8 hinaus geht; der radiale Überstand ist mit a gekennzeichnet, wobei der Überstand a sich nur über ein beschränktes Winkelsegment erstreckt. Der radiale Überstand a des Doppelschneckengetriebes 5 ist maximal so groß wie der halbe Durchmesser d des Planetengetriebes 8, vorzugsweise beträgt der Überstand a jedoch nicht mehr als ¼ Durchmesser d.

## Patentansprüche

1. Antriebseinrichtung eines Fahrzeug-Bauteils, insbesondere einer Karosserieklappe, mit einem elektrischen Antriebsmotor (2), dessen Ankerwelle (3) mit einer Getriebeeinrichtung zum Antrieb einer Abtriebswelle (9) verbunden ist, wobei die Getriebeeinrichtung zumindest eine Doppelgetriebeeinheit (5), bestehend aus zwei Getriebestufen (6, 7) mit zweifacher Richtungsumlenkung umfasst, über die die Übertragung der Antriebsbewegung von der Ankerwelle (3) zur Abtriebswelle (9) zweifach winklig umlenkbar ist, wobei der Doppelgetriebeeinheit (5) eine weitere Getriebestufe (8) nachgeschaltet ist, die als Stirnradstufe mit einem Stirnrad (18) ausgeführt ist, **dadurch gekennzeichnet, dass** dem Stirnrad ein Planetengetriebe (8) nachgeschaltet ist, wobei das Stirnrad (18) der Stirnradstufe zwischen der Doppelgetriebeeinheit (5) und dem Planetengetriebe (8) angeordnet und ein Sonnenrad (19) des Planetengetriebes (8) mit dem Stirnrad (18) drehfest verbunden ist, das mit einem Ritzel (15) auf einer Welle (13) der zweiten Getriebestufe (7) der Doppelgetriebeeinheit (5) kämmt.

2. Antriebseinrichtung nach Anspruch 1, **dadurch gekennzeichnet, dass** die Abtriebswelle (9) parallel oder koaxial zur Ankerwelle (3) liegt.

3. Antriebseinrichtung nach Anspruch 1 oder 2, **dadurch gekennzeichnet, dass** jede Getriebestufe (6, 7) eine 90°-Winkelumlenkung umfasst.

4. Antriebseinrichtung nach einem der Ansprüche 1 bis 3, **dadurch gekennzeichnet, dass** mindestens eine Getriebestufe (6, 7) als Schneckenstufe ausgeführt ist.

5. Antriebseinrichtung nach Anspruch 4, **dadurch gekennzeichnet, dass** beide Getriebestufen (6, 7) als Schneckenstufen ausgeführt sind.

6. Antriebseinrichtung nach Anspruch 5, **dadurch gekennzeichnet, dass** jede Schneckenstufe eine Welle (10, 13) mit einer Schnecke (4, 12) und einem Schneckenrad (11, 14) umfasst, wobei das Schneckenrad (11) der ersten Schneckenstufe (6) mit einer Schnecke (4) auf der Ankerwelle (3) kämmt.

7. Antriebseinrichtung nach einem der Ansprüche 4 bis 6, **dadurch gekennzeichnet, dass** die Schnecke (4, 12) der Schneckenstufe (6, 7) mehrgängig mit mindestens zwei Gängen ausgeführt ist.

8. Antriebseinrichtung nach Anspruch 4 und 7, **dadurch gekennzeichnet, dass** die Schnecken (4, 12) beider Schneckenstufen (6, 7) jeweils mehrgängig mit mindestens zwei Gängen ausgeführt sind.

9. Antriebseinrichtung nach einem der Ansprüche 1 bis 8, **dadurch gekennzeichnet, dass** ein die Planetenräder (20) des Planetengetriebes (8) aufnehmender Planetenradträger (21) drehfest mit der Abtriebswelle (9) verbunden ist.

10. Antriebseinrichtung nach einem der Ansprüche 1 bis 9, **dadurch gekennzeichnet, dass** die Doppelgetriebeeinheit (5) in Radialrichtung - quer zur Ankerwelle (3) - über eine zylindrische Außenfläche der nachgeschalteten Getriebestufe (8) maximal um den Radius der nachgeschalteten Getriebestufe (7) übersteht.

11. Fahrzeug-Bauteil, insbesondere in einer Karosserieklappe, mit einer Antriebseinrichtung (1) nach einem der Ansprüche 1 bis 10.

## Claims

1. Drive device of a vehicle component, in particular a body flap, having an electric drive motor (2), the armature shaft (3) of which is connected to a transmission device for driving an output shaft (9), wherein the transmission device comprises at least one double transmission unit (5), composed of two transmission stages (6, 7) with two changes in direction and by means of which the transmission of the drive movement from the armature shaft (3) to the output shaft (9) can be deflected at two angles, wherein a further transmission stage (8) is arranged downstream of the double transmission unit (5), the transmission stage being embodied as a spur gear stage with a spur gear (18), **characterized in that** a planetary gear mechanism (8) is arranged downstream of the spur gear, wherein the spur gear (18) of the spur gear stage is arranged between the double transmission unit (5) and the planetary gear mechanism (8), and a sun gear (19) of the planetary gear mechanism (8) is connected in a rotationally fixed fashion to the spur gear (18), which meshes with a pinion (15) on a shaft (13) of the second transmission stage (7) of the double transmission unit (5).

2. Drive device according to Claim 1, **characterized in that** the output shaft (9) is parallel or coaxial with respect to the armature shaft (3).

3. Drive device according to Claim 1 or 2, **characterized in that** each transmission stage (6, 7) comprises a 90° angular deflection.

4. Drive device according to one of Claims 1 to 3, **characterized in that** at least one transmission stage (6, 7) is embodied as a worm stage.

5. Drive device according to Claim 4, **characterized in that** the two transmission stages (6, 7) are embodied as worm stages.

6. Drive device according to Claim 5, **characterized in that** each worm stage comprises a shaft (10, 13) with a worm (4, 12) and a worm gear (11, 14), wherein the worm gear (11) of the first worm stage (6) meshes with a worm (4) on the armature shaft (3).

7. Drive device according to one of Claims 4 to 6, **characterized in that** the worm (4, 12) of the worm stage (6, 7) is embodied in a multiple turn fashion with at least two turns.

8. Drive device according to Claim 4 and 7, **characterized in that** the worms (4, 5) of the two worm stages (6, 7) are each embodied in a multiple turn fashion with at least two turns.

9. Drive device according to one of Claims 1 to 8, **characterized in that** a planetary gear carrier (21) which accommodates the planetary gears (20) of the planetary gear mechanism (8) is connected in a rotationally fixed fashion to the output shaft (9).

10. Drive device according to one of Claims 1 to 9, **characterized in that** the double transmission unit (5) protrudes in the radial direction - transversely with respect to the armature shaft (3) - over a cylindrical outer face of the downstream transmission stage (8), at maximum by an amount equal to the radius of the downstream transmission stage (7).

11. Vehicle component, in particular a body flap, having a drive device (1) according to one of Claims 1 to 10.

## Revendications

1. Dispositif d'entraînement d'un composant de véhicule, en particulier d'un hayon de carrosserie, comprenant un moteur d'entraînement électrique (2) dont l'arbre d'induit (3) est relié à un dispositif de transmission pour l'entraînement d'un arbre de sortie (9), le dispositif de transmission comportant au moins une unité de transmission double (5) constituée de deux étages de transmission (6, 7) à double renvoi de direction au moyen desquels la transmission du mouvement d'entraînement de l'arbre d'induit (3) à l'arbre de sortie (9) peut être déviée angulairement deux fois, un étage de transmission supplémentaire (8) étant monté en aval de l'unité de transmission double (5), lequel étage de transmission supplémentaire est réalisé sous forme d'étage à roue droite comprenant une roue droite (18), **caractérisé en ce qu'**une transmission planétaire (8) est montée en aval de la roue droite, la roue droite (18) de l'étage à roue droite étant disposée entre l'unité de transmission double (5) et la transmission planétaire (8) et une roue solaire (19) de la transmission planétaire (8) étant reliée de manière solidaire en rotation à la roue droite (18), laquelle roue droite s'engrène avec un pignon (15) sur un arbre (13) du deuxième étage de transmission (7) de l'unité de transmission double (5).

2. Dispositif d'entraînement selon la revendication 1, **caractérisé en ce que** l'arbre de sortie (9) se situe de manière parallèle ou coaxiale à l'arbre d'induit (3).

3. Dispositif d'entraînement selon la revendication 1 ou 2, **caractérisé en ce que** chaque étage de transmission (6, 7) comporte un renvoi angulaire de 90°.

4. Dispositif d'entraînement selon l'une quelconque des revendications 1 à 3, **caractérisé en ce qu'**au moins un étage de transmission (6, 7) est réalisé sous forme d'étage à vis sans fin.

5. Dispositif d'entraînement selon la revendication 4, **caractérisé en ce que** les deux étages de transmission (6, 7) sont réalisés sous forme d'étages à vis sans fin.

6. Dispositif d'entraînement selon la revendication 5, **caractérisé en ce que** chaque étage à vis sans fin comporte un arbre (10, 13) pourvu d'une vis sans fin (4, 12) et une roue hélicoïdale (11, 14), la roue hélicoïdale (11) du premier étage à vis sans fin (6) s'engrenant avec une vis sans fin (4) sur l'arbre d'induit (3).

7. Dispositif d'entraînement selon l'une quelconque des revendications 4 à 6, **caractérisé en ce que** la vis sans fin (4, 12) de l'étage à vis sans fin (6, 7) est à filets multiples, avec au moins deux filets.

8. Dispositif d'entraînement selon les revendications 4 et 7, **caractérisé en ce que** les vis sans fin (4, 12) des deux étages à vis sans fin (6, 7) sont respectivement à filets multiples, avec au moins deux filets.

9. Dispositif d'entraînement selon l'une quelconque des revendications 1 à 8, **caractérisé en ce qu'**un porte-planétaire (21) recevant les roues planétaires (20) de la transmission planétaire (8) est relié de manière solidaire en rotation à l'arbre de sortie (9).

10. Dispositif d'entraînement selon l'une quelconque des revendications 1 à 9, **caractérisé en ce que** l'unité de transmission double (5) fait saillie dans la direction radiale - transversalement par rapport à l'arbre d'induit (3) - sur une surface extérieure cylindrique de l'étage de transmission (8) monté en aval, au maximum sur une distance égale au rayon de l'étage de transmission (7) monté en aval.

11. Composant de véhicule, en particulier un hayon de carrosserie, comprenant un dispositif d'entraînement (1) selon l'une quelconque des revendications 1 à 10.
